# EUROPEAN PATENT SPECIFICATION

(11) **EP 2 886 182 B1**
(45) Date of publication and mention of the grant of the patent: **16.10.2019**
(21) Application number: 14196500.4
(22) Date of filing: 05.12.2014
(51) Int. Cl.: B01D 45/16, B04C 5/103

(54) **Cylindrical multi-level multi-channel cyclone-filter**
Zylindrischer mehrstufiger, mehrkanaliger Zyklonabscheider
Multicanaux et multi-niveau cyclone cylindrique

(30) Priority: 12.12.2013 LT 2013134
(43) Date of publication of application: 24.06.2015
(73) Proprietor: Vilniaus Gedimino technikos universitetas, 10223 Vilnius (LT)
(72) Inventor: Baltrenas, Pranas, 07143 Vilnius (LT); Chlebnikovas, Aleksandras, 03225 Vilnius (LT)
(74) Representative: Pranevicius, Gediminas

(56) References cited:
- WO-A1-98/52673
- WO-A1-2005/040593
- FR-A1- 2 263 021
- US-B1- 7 434 694

## Description

### FIELD OF THE INVENTION

The present invention relates to inertial air cleaning equipment in which particulates are separated from the air stream under the action of centrifugal forces. Cyclones appear as the most widely applied air treatment devices for air purification by separating a particulate matter from the stream.

### BACKGROUND OF THE INVENTION

According to the method of treatment, the current device can be attributed to dry cleaning equipment and can be employed in different fields of industry associated with the emission of particulates in the atmosphere. In practice, cyclones have gained wide application in all industries, for example, in construction, building materials, mechanical engineering, in chemistry, cooking, wood processing, paper production, furniture production, repair of vehicles as well as in agriculture, energy facilities, etc. The particulate matter appears in various processes of recycling that include crushing, combustion, initiating chemical reactions, drying, transporting dry materials, etc.

Fairly big particulate matter, for example the particles of 20 µm in diameter and larger, found in the air flow, can be separated quite easily. For that purpose, traditional cyclones, dust precipitators and inertial and louver-type air treatment equipment having a simple structure and smooth operation are extensively employed.

To remove fine (10÷20 µm) and ultra-fine (1÷10 µm) particulate matter from the air flow, complex equipment, for instance, electrostatic or baghouse filters and venturi scrubbers, the maintenance of which is rather complicated, are required. Ultra-fine particulates are extremely hazardous to human health as they can easily enter the lungs and accumulate in pulmonary alveoli, which may cause pneumoconiosis. Therefore, the processes that generate the emission of particulates are subject to stringent environmental requirements.

WO98/52673 mentions the use of a cyclone separator comprising a housing defined by a cylindrical peripheral wall provided with at least one inlet opening for entering the gas or fluid to be purified; an outlet means in a form of a hollow truncated cone arranged below the housing for discharging separated solid particulate; a pipe means for evacuating the clean fluid or gas from said housing, said pipe means being placed within said housing coaxially with said longitudinal axis; and at least one swirling means for imparting vortical motions to said fluid or gas, said swirling means being formed as a tubular member, mounted within said housing coaxially with longitudinal axis of said housing so as to provide for annular space therebetween, said tubular member being provided with plurality of slit-like openings, formed in periphery thereof so as to enable communication between said annular space and the interior of said tubular member, wherein said openings are arranged regularly on the periphery of said member so as to extend substantially tangentially with respect to the interior thereof to provide for the total open area which is sufficient for imparting to the fluid entering the interior of said swirling means of intensive vortical motion.

According to another embodiment said tubular member is assembled from at least two modular units, each of said units being defined by a cylindrical peripheral wall thereof and by opposing upper and lower annular extremities thereof, wherein said slit-like openings are formed in the peripheral wall of said modular units, and their upper and lower extremities are provided with a mating means enabling the assembling of said modular units together.

The drawback of a current separator in applicant's opinion is that the separator's housing is not separated from the hollow truncated cone arranged below, therefore there exists a possibility that separated solid particulates of size less than 1000 kg/m³ may be returned back to a cyclone at a linear air stream velocity of 70 m/s. In order the cyclone to be effective it is necessary to always maintain a high air steam velocity by using an additional equipment like air blowers, ventilators etc.

Another prototype of the present invention is a multi-channel cyclone (LT5912, B04C) designed for removing particulate matter from air or other gaseous environment. The device consists of an air flow inlet, a treated flow outlet, a cylindrical casing - separation chamber comprising curved channels, and a cylindrical hopper the depth of which is not less than 1,4 of channel height and which is connected to circular spaces in the casing in the first and second channels of the device. The drawback of the multi-channel cyclone is that an increase in the output of the device enlarges the size of equipment, and treatment efficiency grows only to a small extent.

### SUMMARY OF THE INVENTION

The goal of the present invention is to improve the structure of the cyclone thus increasing air treatment efficiency, capacity and compactness.

The cylindrical multi-level multi-channel cyclone-filter consists of several cyclones installed in a single casing one above the other and inter-connected to a common tangential air inlet and to a central air outlet. Every cyclone comprises internal quarter-ring-**shaped portions** with **adjustable** spacings **between their** ends, openings cut out in quarter-ring-shaped **portions** with their plates bent outwards at an angle of 5÷15° in the direction of the movement of dusty air. At the **bottom** of the cyclone casing a dual conical hopper is arranged.

The operating principle of the cylindrical multi-level multi-channel cyclone-filter is based on that the biphasic air flow, i.e. the air contaminated with particulate matter moves tangentially to all channels of the multi-channel cyclone where particulates are removed from the airflow under the action of centrifugal forces and filtration processes taking place in all channels. Under influence of centrifugal forces rather big particulate matter (20 µm and bigger) are separated, and the process of filtration separates fine and ultra-fine particulates that make less than 20 µm and even those that are 1÷10 µm in diameter.

Experimentally were defined the aerodynamic parameters of the cyclone such as rate and pressure, as well as air treatment efficiencies depending on the peripheral volume, i.e. the reverse-flow to the previous channel, and transitional volume, i.e. the flow moving further to the following channel, at percentages of 75:25, 50:50 and 25:75. The peripheral air flow, after entering the previous channel, makes an air curtain that acts as a filter against a dusty air flow, which empowers suspending fine particulates of 1÷10 µm in diameter and directing them to the hopper.

Dusty air having entered the first channel under the action of centrifugal forces is transferred to segmental circular spaces and reaches the hopper, whereas dusty air that passes further moves through other channels into the outlet of the purified air, takes the next level and keeps on moving up to the final outlet from the cyclone. Openings in the peripheral walls of the channels allow particulates returning to the previous channel and passing to the hopper through segmental spaces, what increases treatment efficiency. Similar openings can be observed at every level in every quarter-ring-**shaped portion** with a plate of the opening diverting the dusty flow towards the previous channel.

The biphasic air flow generated in all channels is affected by centrifugal forces directing the particulate matter towards the outer peripheral wall of the channels and further through the openings in channels towards the previous channel up to the first channel and through segmental spaces to the hopper.

Adjustable **spacings** enabling variations in the percentage of peripheral and transitional air flows, for example, at 75:25, 50:50, 25:75, have been arranged on the axes of the cyclone between the ends of quarter-ring-**shaped portions,** thus taking control over air treatment efficiency depending on the density and dispersion of particulate matter under changes in the resistance of the cyclone.

The larger peripheral, i.e. the reverse flow results in a more stable and stronger curtain and a more stable process of filtration. Particulates are more effectively detained by employing the air curtain and thus more reliably diverted towards the outer peripheral wall of the channel cross all channels through the openings of peripheral walls and get to the hopper through segmental spaces.

The use of quarter-ring**-shaped portions** instead of semi-rings is benefitting in that at the ends of quarter-ring-**shaped portions,** i.e. in four places on the axes, air curtains filtering dusty air are formed, thus increasing air treatment efficiency.

Every quarter-ring-**shaped portion** has an opening the area of which makes a one third of the area of the quarter-ring-**shaped portion** and is positioned in the middle of the guarter-ring-**shaped portion** while the plate of the opening is bent outwards at an angle of 5÷15° and follows the direction of dusty air. This allows adjusting the cross-sectional area of the channel, which has an impact on air flow rate and, certainly, on an increase in centrifugal forces that improve the air treatment efficiency.

The resistance of the cyclone increases along with a growing number of channels. The cyclones having four, six and eight channels have been investigated. A higher number of channels enhance air treatment efficiency in the cyclone; however, resistance also grows.

### DESCRIPTION OF DRAWINGS

Further the invention will be described in more detail with reference to drawings wherein:

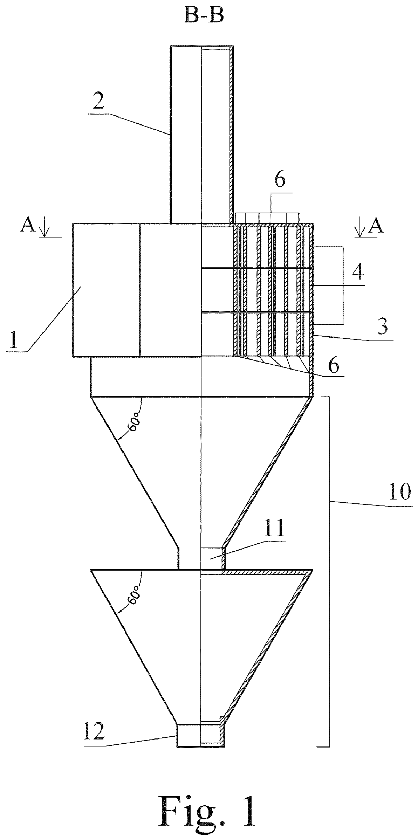

Fig. 1 is the image of the schematic cross-sectional view of the cylindrical multi-level multi-channel cyclone-filter taken through line B-B of fig. 2;
Fig. 2 - 4 are the images of the schematic cross-sectional views of the cylindrical multi-level multi-channel cyclone-filter under flow distribution rates at 25:75, 50:50 and 75:25 taken through line B-B of fig. 1;

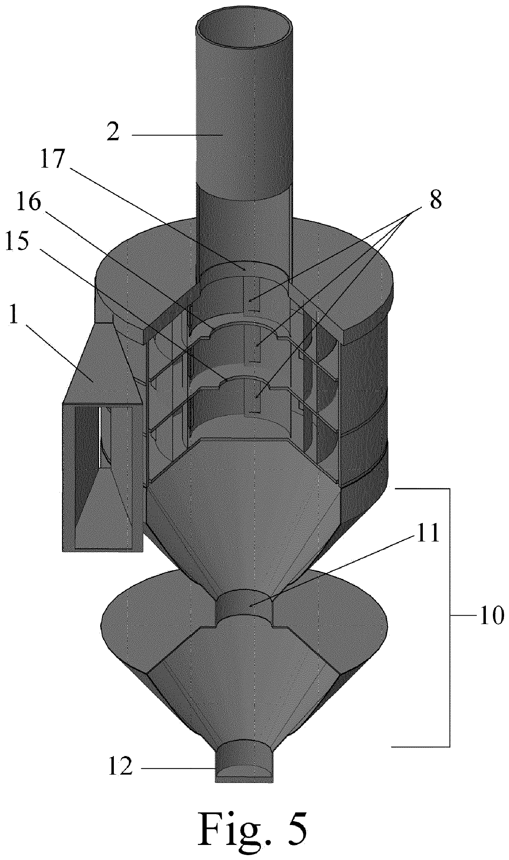

Fig. 5 is an axonometric view of the cylindrical multi-level multi-channel cyclone-filter;

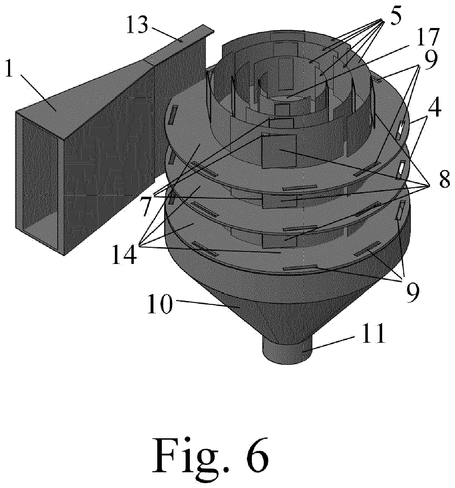

Fig. 6 is an internal axonometric view of the image of the cylindrical multi-level multi-channel cyclone-filter with arranged channels and openings in peripheral walls.

### DETAILED DESCRIPTION OF A PREFERRED EMBODIMENT

The cylindrical multi-level multi-channel cyclone-filter consists of a polluted air inlet 1, a purified air outlet 2, a three-level casing of the multi-channel cyclone 3 equipped with three multi-channel cyclones 4 with installed quarter-ring-**shaped portions** 5 having **adjustable** spacings at **their** ends 6 set out on axes *x* and *y.* Quarter-ring-**shaped portions** 5 have openings 7, and their plates 8 are bent outwards in the direction of the dusty air flow at an angle a between 5÷15°. Cyclones 4 have segmental circular spaces 9 designed for collecting particulate matter into a double-hopper 10 installed at the bottom of the casing of cyclones 3 and made of upper and lower hoppers connected by a common air duct 11.

Segmental circular spaces 9 made in cyclones 4 are designed for collecting particulates into the double hopper 10 from which they are removed through an air duct 12.

The blower supplies the air contaminated with particulate matter, i.e. the biphasic flow to the cylindrical multi-level multi-channel cyclone-filter through the inlet 1. Then the biphasic flow enters the first channel 13 at all levels and passes all other channels 14. The biphasic flow simultaneously gets access to all three levels 4. The motion of the biphasic flow is affected by centrifugal force, and particulates larger than 10 µm are diverted to quarter-ring-**shaped portions** 5 and then from the first channel 13 into segmental circular spaces of three-level cyclones 9, and in other channels - through openings 7 **in the quarter-ring-shaped portions 5** to the previous channels up to the first channel 13. The channels 14 of the cyclone are constituted of quarter-ring**-shaped portions** 5 having adjustable spacings at **their** ends 6 set out on axes x and y. The cyclones having four, six, eight and even more channels can be employed; however, a growing number of channels increase the resistance of the cyclone. Efficiency depends on the nature of particulate matter, i.e. the density, dispersion and form of particulates.

As the biphasic flow is fed to all three levels of the cyclone 4, it moves from the first-level channels of the cyclone via the central air duct 15 to the second-level central air duct 16, to which also the biphasic flow has entrance from all the channels of the cyclone at this level, and then moves to the third central air duct 17 together with the third-level flow from all the channels of the cyclone at the third level. Then all collected flow is discharged into the environment through the outlet 2 of the purified air. Particulate matter assembled from all the channels of the cyclone at the third level enter segmental spaces 9 from which pass to segmental spaces 9 of the cyclone at the second level, and finally, through segmental spaces 9 of the cyclone at the first level get into the double hopper 10.

The dusty air tangentially enters the cylindrical multi-level multi-channel cyclone, passes through all channels and gets to the capacities at all levels where the areas of cross-sections upwards increase at a ratio of 1.0:1.5:2.0 (chart 1) starting from the lower cyclone.

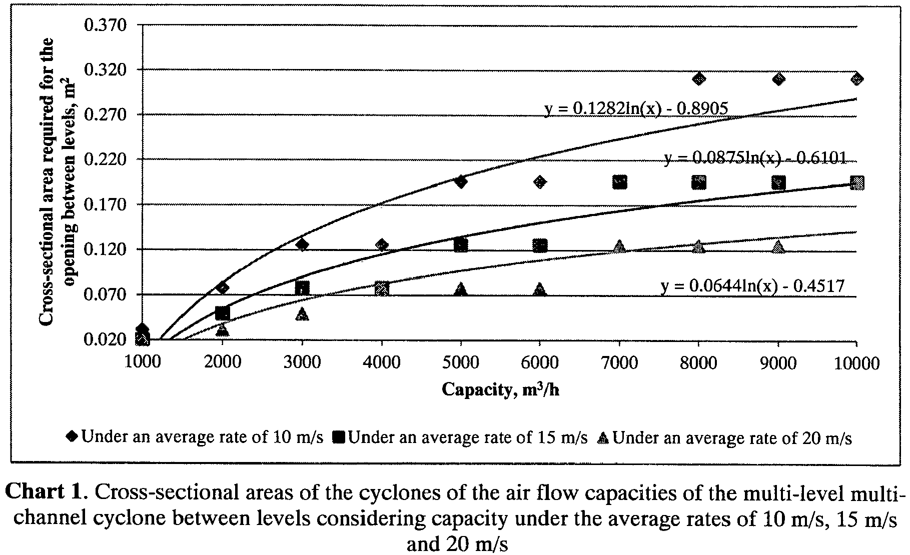

Chart 1 shows the dependence of the capacity of the multi-level multi-channel cyclone on the cross-sectional areas of outgoing air ducts under three different rates, which can be used for designing cyclones. Table 1 displays the interdependence of diameter, cross-sectional areas and the existing friction loss of the multi-level multi-channel cyclone between levels. The application of the air ducts of a different diameter between multi-level cyclones allows an even distribution of air quantities, which increases air treatment efficiency.

**Table 1. The interdependence of diameter, cross-sectional areas and the existing friction loss of outgoing air ducts of the multi-level multi-channel cyclone between levels under varying capacity and the average air flow rates of 10 m/s, 15 m/s and 20 m/s**

| Rate at the air flow outlet of the cyclone | Under an average air flow rate of 10 m/s | | | | | | | | | |
|---|---|---|---|---|---|---|---|---|---|---|
| Capacity, m³/h | 1000 | 2000 | 3000 | 4000 | 5000 | 6000 | 7000 | 8000 | 9000 | 10000 |
| Required diameter of the opening, mm | 200 | 315 | 400 | 400 | 500 | 500 | 500 | 630 | 630 | 630 |
| Required diameter of the cross-sectional area, m² | 0,031 | 0,078 | 0,126 | 0,126 | 0,196 | 0,196 | 0,196 | 0,312 | 0,312 | 0,312 |
| Existing friction loss, Pa/m | 5,2 | 4,3 | 3,5 | 3 | 2,5 | 2,2 | 2 | 2 | 1,8 | 1,7 |

| Rate at the air flow outlet of the cyclone | Under an average air flow rate of 15 m/s | | | | | | | | | |
|---|---|---|---|---|---|---|---|---|---|---|
| Capacity, m³/h | 1000 | 2000 | 3000 | 4000 | 5000 | 6000 | 7000 | 8000 | 9000 | 10000 |
| Required diameter of the opening, mm | 160 | 250 | 315 | 315 | 400 | 400 | 500 | 500 | 500 | 500 |
| Required diameter of the cross-sectional area, m² | 0,020 | 0,049 | 0,078 | 0,078 | 0,126 | 0,126 | 0,196 | 0,196 | 0,196 | 0,196 |
| Existing friction loss, Pa/m | 15 | 11 | 9,5 | 8,5 | 7,5 | 6,5 | 6 | 5,5 | 5 | 4,8 |

| Rate at the air flow outlet of the cyclone | Under an average air flow rate of 20 m/s | | | | | | | | | |
|---|---|---|---|---|---|---|---|---|---|---|
| Capacity, m³/h | 1000 | 2000 | 3000 | 4000 | 5000 | 6000 | 7000 | 8000 | 9000 | 10000 |
| Required diameter of the opening, mm | 160 | 200 | 250 | 315 | 315 | 315 | 400 | 400 | 400 | 500 |
| Required diameter of the cross-sectional area, m² | 0,020 | 0,031 | 0,049 | 0,078 | 0,078 | 0,078 | 0,126 | 0,126 | 0,126 | 0,196 |
| Existing friction loss, Pa/m | 40 | 28 | 20 | 17 | 16 | 14 | 13 | 12 | 10 | 9,5 |

A larger number of the levels and channels of cyclones increases the efficiency of purifying dusty air and aerodynamic resistance (Table 2). The table also presents data on experimental research.

**Table 2. Variations in the aerodynamic resistance of the two-level multi-channel cyclone considering the number of channels under the percentage of air flow distribution rates of 25/75, 50/50 and 75/25 and the average air flow rates of 8 m/s, 12 m/s and 16 m/s in the channels.**

| Aerodynamic resistance of the two-level multi-channel cyclone, Pa | | | | | | | | |
|---|---|---|---|---|---|---|---|---|
| 4 channels | | | | | | | | |
| Under an average air (gas) flow rate of 16 m/s in the channels | | | Under an average air (gas) flow rate of 12 m/s in the channels | | | Under an average air (gas) flow rate of 8 m/s in the channels | | |
| 25/75 | 50/50 | 75/25 | 25/75 | 50/50 | 75/25 | 25/75 | 50/50 | 75/25 |
| 1190 | 1325 | 1350 | 730 | 930 | 960 | 455 | 530 | 545 |

| 6 channels | | | | | | | | |
|---|---|---|---|---|---|---|---|---|
| Under an average air (gas) flow rate of 16 m/s in the channels | | | Under an average air (gas) flow rate of 12 m/s in the channels | | | Under an average air (gas) flow rate of 8 m/s in the channels | | |
| 25/75 | 50/50 | 75/25 | 25/75 | 50/50 | 75/25 | 25/75 | 50/50 | 75/25 |
| 1380 | 1590 | 1610 | 850 | 1010 | 1090 | 580 | 600 | 700 |

| 8 channels | | | | | | | | |
|---|---|---|---|---|---|---|---|---|
| Under an average air (gas) flow rate of 16 m/s in the channels | | | Under an average air (gas) flow rate of 12 m/s in the channels | | | Under an average air (gas) flow rate of 8 m/s in the channels | | |
| 25/75 | 50/50 | 75/25 | 25/75 | 50/50 | 75/25 | 25/75 | 50/50 | 75/25 |
| 1600 | 1635 | 1660 | 1070 | 1240 | 1320 | 650 | 750 | 940 |

The above table shows variations in the aerodynamic resistance of the cyclone depending on the number of channels (four, six and eight), air flow rates and peripheral and transitional air flow ratios 25:75, 50:50 and 75:25. Thus, for choosing a type of the multi-level multi-channel cyclone, the main parameters, for example, aerodynamic pressure can be considered.

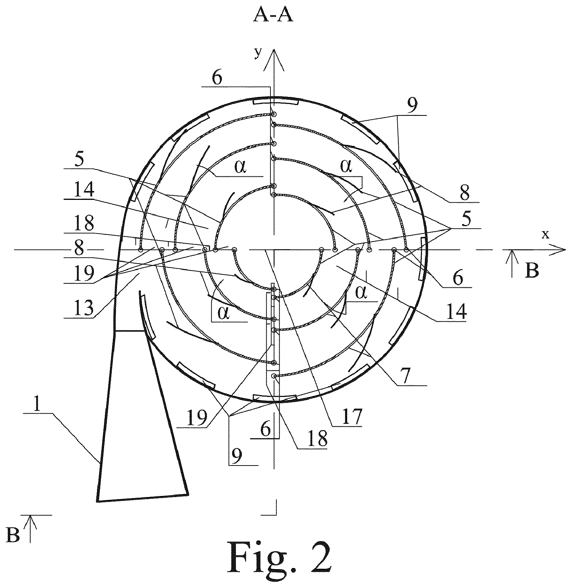

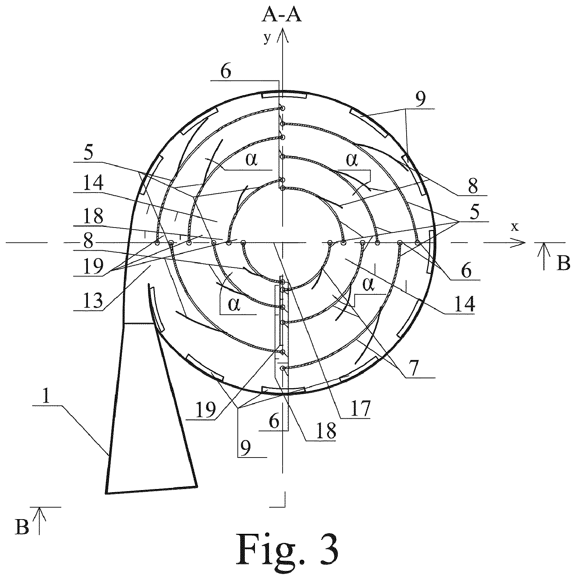

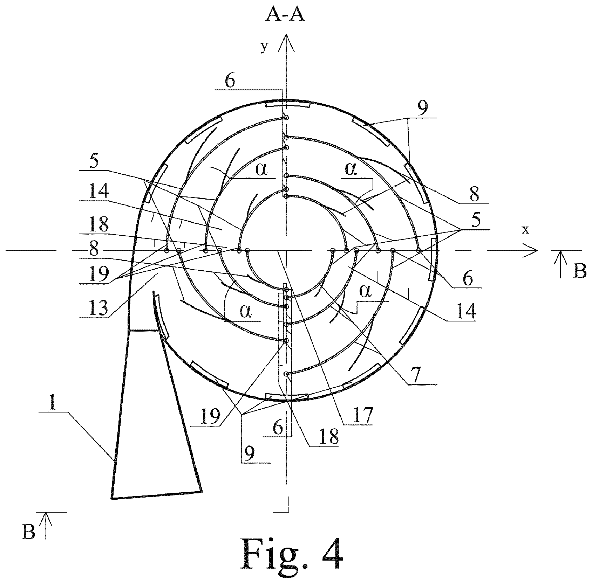

By adjusting spacings between the ends 6 of quarter-ring**-shaped portions** 5 set out on axes x and y, the relative amounts of biphasic air are changed, for example, into ratios 25:75 (fig. 2), 50:50 (fig. 3) and 75:25 (fig. 4). Thus, the amounts of peripheral and transitional air can vary, which provides a possibility of more effective air treatment by removing particulate matter of different dispersion and density. Appropriate spacing assists in more effective treatment of the dusty air. The employment of the multi-level cyclone allows cleaning a greater amount of air under a smaller cross-sectional area. The application of quarter-ring**-shaped portions** instead of half-rings increases air treatment efficiency by removing fine particulates up to 10 µm in particular, as four air curtains instead of two are received at every level of the cyclone. Air curtains are the part of equipment that suspends fine particles, which is very important for this cyclone.

To increase the efficiency of the cyclone, the double conical hopper 10 with conicity of 60° is employed, having a contraction 11 equal to the diameter of the outgoing air duct 15 of the cyclone at the first level forming a barrier to particulates getting back to the cyclone 4 and escaping to the environment, and an air duct 12 for removal of particulate matter. Conical hoppers with conicity of 60° make optimal conditions for particulates to enter both hoppers.

Openings 7 cut out in quarter-ring**-shaped portions** 5 allow particulate matter consistently access from the dusty air flow whirling in channels 14 to the previous channels up to the first channel 13, and through segmental circular spaces 9 to the hopper 10, what qualitatively increases air treatment efficiency.

The openings 7 and plates 8 bent outwards at an angle α allow changing the cross-sectional area of channels 14 thus simultaneously providing the necessary air flow rate inside it and increasing a centrifugal force, which results in achieving optimum treatment efficiency depending on the density and dispersion of fine particulates being removed.

## Claims

1. A cylindrical multi-level multi-channel cyclone-filter having a tangential air inlet, central air outlet, a housing comprising several stacked cyclones with swirling means for imparting vortical motions to said air, curved segments of a different diameter with adjustable spacings at the ends, constituting air flow channels, a separation chamber with segmental circular spaces, a conical hopper for collecting particulate matter, **characterised in that** cyclones (4) having installed plurality of internal quarter-ring-shaped portions (5) with their ends (6) arranged on axis x, y and with adjustable spacings between the adjacent ends (6) of quarter-ring-shaped portions (5), the quarter-ring-shaped portions (5) have openings (7) cut out in the quarter-ring-shaped portions (5) with their plates (8) bent outwards at an angle a in the direction of the air flow; and a double conical hopper (10) connected by a common air duct (11) mounted at the bottom of the casing (3).

2. A cylindrical multi-level multi-channel cyclone-filter according to claim 1, **characterised in that** the diameter of air outlets (15, 16, 17) of each of the stacked cyclones (4), in transition from the bottom from one level to another, increases at a ratio of 1,0:1,5:2,0.

3. A cylindrical multi-level multi-channel cyclone-filter according to claim 1, **characterised by** comprising a double conical hopper (10) with conicity of 60° having a connecting air duct (11) the diameter of which is equal to the diameter of the outlet duct (15) of the cyclone (4) at the first level.

4. A cylindrical multi-level multi-channel cyclone-filter according to claim **1**, **characterised in that** the quarter-ring-shaped portions (5) of a different diameter have retainers at their ends (6) for fixing the quarter-ring-shaped portions (5) in three positions, thus establishing the percentage ratios of peripheral and transitional air flows at 25:75, 50:50 75:25 for producing filtering curtains in four positions on axes x and y.

5. A cylindrical multi-level multi-channel cyclone-filter according to claim 1, **characterised in that** quarter-ring-shaped portions (5) in all cyclones (4) have openings (7) cut out in the quarter-ring-shaped portions (5) constituting the one third of quarter-ring-shaped portions (5) area with their plates (8) bent outwards at an angle α in the direction of the air flow and directing the dusty air flow towards the openings of other channels (14) and from the first channel (13) towards the segmental circular spaces (9).

6. A cylindrical multi-level multi-channel cyclone-filter according to claim **5**, **characterised in that** the angle α is between 5÷15°.

7. A cylindrical multi-level multi-channel cyclone-filter according to claim 5, **characterised in that** cyclones (4) arranged one above the other have segmental circular spaces (9) arranged one above the other.

## Patentansprüche

1. Zylindrischer mehrstufiger, mehrkanaliger Zyklonabscheider mit einem tangentialen Lufteinlass, einem zentralen Luftauslass, einem Gehäuse, das mehrere gestapelte Zyklone umfasst mit Wirbelmitteln zum Ausüben von Wirbelbewegungen auf die Luft, gekrümmten Segmenten mit unterschiedlichem Durchmesser mit einstellbaren Abständen an den Enden, die Luftströmungskanäle bilden, einer Trennkammer mit kreisförmigen Segmenträumen, einem konischen Trichter zum Sammeln von Partikeln, **dadurch gekennzeichnet, dass** Zyklone (4) mehrere innere viertelringförmige Abschnitte (5) eingebaut haben, die mit ihren Enden (6) auf der Achse x, y angeordnet sind, und mit einstellbaren Abständen zwischen den benachbarten Enden (6) der viertelringförmigen Abschnitte (5), wobei die viertelringförmigen Abschnitte (5) Öffnungen (7) aufweisen, die in den viertelringförmigen Abschnitten (5) ausgeschnitten sind, die mit ihren Platten (8) in einem Winkel α in Richtung des Luftstroms nach außen gebogen sind; und einem doppelkegelförmigen Trichter (10), der durch einen gemeinsamen Luftkanal (11) verbunden ist, der an dem Boden des Gehäuses (3) angebracht ist.

2. Zylindrischer mehrstufiger, mehrkanaliger Zyklonabscheider nach Anspruch 1, **dadurch gekennzeichnet, dass** sich der Durchmesser der Luftauslässe (15, 16, 17) jedes der gestapelten Zyklone (4), am Übergang vom Boden, von einer Stufe zu einer anderen, in einem Verhältnis von 1,0:1,5:2,0 vergrößert.

3. Zylindrischer mehrstufiger, mehrkanaliger Zyklonabscheider nach Anspruch 1, **gekennzeichnet dadurch, dass** er einen doppelkegelförmigen Trichter (10) mit einer Konizität von 60° mit einem Verbindungsluftkanal (11), dessen Durchmesser gleich dem Durchmesser des Auslasskanals (15) des Zyklons (4) auf der ersten Stufe ist, umfasst.

4. Zylindrischer mehrstufiger, mehrkanaliger Zyklonabscheider nach Anspruch 1, **dadurch gekennzeichnet, dass** die viertelringförmigen Abschnitte (5) mit unterschiedlichem Durchmesser an ihren Enden (6) Halterungen zur Fixierung der viertelringförmigen Abschnitte (5) in drei Positionen aufweisen, wodurch die prozentualen Verhältnisse der peripheren Luftströme und der Übergangsluftströme bei 25:75, 50:50 und 75:25 festgelegt werden, um Abscheidervorhänge in vier Positionen auf den Achsen x und y herzustellen.

5. Zylindrischer mehrstufiger, mehrkanaliger Zyklonabscheider nach Anspruch 1, **dadurch gekennzeichnet, dass** viertelringförmige Abschnitte (5) in allen Zyklonen (4) in den viertelringförmigen Abschnitten (5) ausgeschnittene Öffnungen (7) aufweisen, die ein Drittel der viertelringförmigen Abschnitte (5) bilden, die mit ihren Platten (8) in einem Winkel α in Richtung des Luftstroms nach außen gebogen sind und den staubigen Luftstrom zu den Öffnungen anderer Kanäle (14), und von dem ersten Kanal (13) in Richtung der segmentförmigen Kreisräume (9) lenken.

6. Zylindrischer mehrstufiger, mehrkanaliger Zyklonabscheider nach Anspruch 5, **dadurch gekennzeichnet, dass** der Winkel α zwischen 5 und 15° liegt.

7. Zylindrischer mehrstufiger, mehrkanaliger Zyklonabscheider nach Anspruch 5, **dadurch gekennzeichnet, dass** übereinander angeordnete Zyklone (4) untereinander angeordnete segmentförmige Kreisräume (9) aufweisen.

## Revendications

1. Filtre cyclone multicanaux multiniveaux cylindrique doté d'une entrée d'air tangentielle, d'une sortie d'air centrale, d'un boîtier comprenant plusieurs cyclones empilés avec un moyen tourbillonnant pour impartir des mouvements tourbillonnaire audit air, des segments courbés de diamètres différents avec des espacements réglables aux extrémités constituant des canaux d'écoulement d'air, une chambre de séparation comportant des espaces circulaires segmentaires, une trémie conique pour la collecte de matière en particules, **caractérisé en ce que** les cyclones (4) comportent une pluralité installée de sections internes en forme de quarts d'arc de cercle (5) dont les extrémités (6) sont disposées sur l'axe x, y et avec des espacements réglables entre les extrémités adjacentes (6) des sections en forme de quarts d'arc de cercle (5), les sections en forme de quarts d'arc de cercle (5) comportant des orifices (7) pratiqués sur les sections en forme de quarts d'arc de cercle (5) avec des plaques (8) courbées vers l'extérieur suivant un angle α dans le sens de l'écoulement d'air ; et d'une double trémie conique (10) connectée par une conduite d'air commune (11) montée au fond du compartiment (3).

2. Filtre cyclone multicanaux multiniveaux cylindrique selon la revendication 1, **caractérisé en ce que** le diamètre des sorties d'air (15, 16, 17) de chacun des cyclones empilés (4), dans la transition depuis le fond d'un niveau à un autre, augmente suivant un rapport de 1,0:1,5:2,0.

3. Filtre cyclone multicanaux multiniveaux cylindrique selon la revendication 1, **caractérisé par le fait qu'**il comprend une double trémie conique (10) d'une conicité de 60° comportant une conduite d'air de connexion (11) dont le diamètre est égal au diamètre de la conduite de sortie (15) du cyclone (4) au premier niveau.

4. Filtre cyclone multicanaux multiniveaux cylindrique selon la revendication 1, **caractérisé en ce que** les sections en forme de quarts d'arc de cercle (5) de diamètres différents comportent des systèmes de retenue à leurs extrémités (6) pour fixer les sections en forme de quarts d'arc de cercle (5) dans trois positions, en établissant ainsi les rapports de pourcentage des écoulements d'air périphériques et transitionnels à 25:75, 50:50 75:25 pour produire des rideaux de filtration à quatre positions sur les axes x et y.

5. Filtre cyclone multicanaux multiniveaux cylindrique selon la revendication 1, **caractérisé en ce que** les sections en forme de quarts d'arc de cercle (5) de tous les cyclones (4) comportent des orifices (7) pratiqués dans les sections en forme de quarts d'arc de cercle (5) constituant le tiers de la superficie des sections en forme de quarts d'arc de cercle (5) avec leurs plaques (8) tournées vers l'extérieur suivant un angle α dans le sens de l'écoulement d'air et dirigeant d'air poussiéreux vers les orifices des autres canaux (14) et depuis le premier canal (13) en direction des espaces circulaires segmentaires (9).

6. Filtre cyclone multicanaux multiniveaux cylindrique selon la revendication 5, **caractérisé en ce que** l'angle est compris entre 5 et 15°.

7. Filtre cyclone multicanaux multiniveaux cylindrique selon la revendication 5, **caractérisé en ce que** les cyclones (4) disposés l'un sur l'autre comportent des espaces circulaires segmentaires (9) disposés les uns sur les autres.
